Europäisches Patentamt

European Patent Office

Office européen des brevets

(19)

(11) Veröffentlichungsnummer : **0 072 453**
**B1**

(12) EUROPÄISCHE PATENTSCHRIFT

(45) Veröffentlichungstag der Patentschrift :
19.12.84

(21) Anmeldenummer : 82106604.0

(22) Anmeldetag : 22.07.82

(51) Int. Cl.³ : **D 04 H 3/04**, D 04 H 3/12

(54) Verfahren und Vorrichtung zur Herstellung eines Geleges.

(30) Priorität : 19.08.81 DE 3132697

(43) Veröffentlichungstag der Anmeldung :
23.02.83 Patentblatt 83/08

(45) Bekanntmachung des Hinweises auf die Patenterteilung : 19.12.84 Patentblatt 84/51

(84) Benannte Vertragsstaaten :
CH DE FR GB IT LI NL SE

(56) Entgegenhaltungen :
DE-A- 3 003 666
FR-A- 2 180 606

(73) Patentinhaber : AEROTEX Hochleistungsfaser GmbH
Neulandstrasse 38
D-4150 Krefeld 1 (DE)

(72) Erfinder : Pott, Richard
Tannenbergstrasse 33
D-4937 Lage/Lippe (DE)

(74) Vertreter : Stracke, Alexander, Dipl.-Ing. et al
Patentanwälte Dipl.-Ing. Loesenbeck Dipl.-Ing.
Stracke Jöllenbecker Strasse 164 Postfach 5605
D-4800 Bielefeld 1 (DE)

## Beschreibung

Die Erfindung betrifft ein Verfahren zur Herstellung eines Geleges entsprechend dem Gattungsbegriff des Anspruches 1 und eine Vorrichtung zur Durchführung eines derartigen Verfahrens. Ein derartiges Gelege ist durch die DE-A-23 20 133 bekannt. Der Nachteil dieser Gelegebahn besteht darin, daß sie mindestens auf einer ihrer beiden Seiten geschmolzene, synthetische Fäden transversal zur der Richtung der parallelliegenden Hochleistungseinzelfäden aufweist. Dabei ist es notwendig, diese Fäden auf eine ausreichende Temperatur zu bringen, um sie zu schmelzen, beispielsweise mittels zweier Backen, von denen zumindest eine erhitzt ist. Bei Anordnung von zwei Backen ist nur eine diskontinuierliche Arbeitsweise möglich, bei kontinuierlichem Arbeiten besteht die Schwierigkeit darin, die Fäden innerhalb von Bruchteilen von Sekunden zum Schmelzen zu bringen, um einigermaßen kontinuierlich das Verfahren durchführen zu können. Die geschmolzenen, synthetischen Fäden sollen dann die Hochleistungseinzelfäden verbinden, die sich an der Oberfläche des Geleges befinden, und zwar an deren Auflagerungsstellen, ohne jedoch durch das Gelege hindurchzugehen.

Durch die Tatsache des Aufschmelzens der synthetischen Fäden auf die Hochleistungseinzelfäden ist aber die Placierung des schmelzenden Materials unsicher, so daß keine einwandfreie Verbindung der Hochleistungsfäden miteinander erzielbar ist. Ein Nachteil besteht auch in der Wärmebeaufschlagung.

Weiterhin ist in der genannten Druckschrift ausgesagt, daß es bereits bekannt war, durch Weben Gewebe herzustellen, deren Schuß aus umsponnenen oder nichtumsponnenen Kohlenstoffasern und deren Kette aus natürlichen, künstlichen oder synthetischen Fäden besteht. Der Nachteil von derartigen Geweben besteht in der Verringerung der physikalischen Werte des Endproduktes. Ferner ist ein hoher Fertigungsaufwand vorhanden und als gravierendster Nachteil ist die Tatsache zu sehen, daß insgesamt gesehen keine glattflächige Bahn entsteht. Somit ergibt sich, daß bei der Anwendung in dünnwandigen Bauteilen, z. B. Segelflugzeug-, Hubschrauberrotorblatt- und Rennbootsbau zu große Unebenheiten in diesen Bändern vorhanden sind.

Unidirektionale Fasergelege haben sehr große Vorteile gegenüber Geweben. So wird in der 0°-Achse, z. B. bei Carbonfasern, eine um ca. 30 % höhere Zugfestigkeit und ein um ca. 40 % höherer Elastizitätsmodul als bei Geweben erzielt, bei denen die Fadenverkreuzungen die Minderung der physikalischen Werte bewirken.

Der Erfindung liegt somit die Aufgaben zugrunde, die Herstellung einer Gelegebahn der eingangs beschriebenen Art zu vereinfachen und gleichzeitig das Produkt erheblich zu verbessern unter Vermeidung von Wärmebeaufschlagung der Hochleistungseinzelfäden und exakter Placierung der Verbindungsmittel.

Diese Aufgabe wird durch die im Kennzeichen des Anspruches 1 und des Anspruches 7 aufgeführten Merkmale gelöst.

Mit der Erfindung ist es nun möglich, kontinuierlich auf einer Trägerbahn die Haftfäden od. dgl. zulaufen zu lassen und sie exakt auf das von einer Spule ebenfalls kontinuierlich zulaufende unverdrehte Faserbündel bzw. den Faserstrang aufzusetzen, ohne daß die Gefahr besteht, daß anschließend der Haftbereich sich verschiebt, verändert oder verläuft.

Es wird somit erreicht, daß dünne, evtl. mit einem Haftvermittler versehene Fäden od. dgl. durch das erfindungsgemäße Verfahren quer zur Faden- oder Bahnachse auf die vorgespannten, parallelliegenden Faserstränge bzw. auf die Gelegebahn aufgebracht werden. Diese Haftfäden od. dgl. haben die wichtige Aufgabe, die parallelliegenden Faserstränge bzw. die in Einzelfasern schon aufgelösten Faserstränge zu einer eigenstabilen Gelegebahn zu fixieren, ohne deren Oberfläche negativ zu beeinflussen und auch ohne daß durch ihr Aufsetzen die Gelegebahn selbst negativ beeinflußt wird.

Beim Erfindungsgegenstand soll das von mindestens einer Spule kontinuierlich zulaufende, unverdrehte Faserbündel bzw. der Faserstrang zunächst ausgebreitet und unidirektional im Faserverlauf liegend zu einer flächigen Gelegebahn geformt werden, bevor die Gelegebahn zur Andruckstation gelangt. Damit ist ein kontinuierlicher Zulauf einer Gelegebahn gewährleistet, die zwar noch keine Verbindung hat, aber durch die Führung in Bahnform während des Verfahrens ihre Stabilisierung hat. In der Andruckstation werden dann die Haftfäden od. dgl. quer zu dem Bahnverlauf der Gelegebahn auf diese aufgebracht, so daß die Querstabilität danach gegeben ist.

Vorzugsweise erfolgt die Auflage der Haftfäden bzw. anderer Verbindungsmittel beidseitig. Die Abgabe bzw. das Aufsetzen der Verbindungsmittel erfolgt unter Druck.

Weitere vorteilhafte Ausgestaltungen der Erfindung sind durch die Unteransprüche gekennzeichnet.

Weitere Kennzeichen und Merkmale ergeben sich aus den nachfolgend beschriebenen Ausführungsbeispielen.

In den Zeichnungen sind Ausführungsbeispiele der Vorrichtung stark schematisiert dargestellt. Es zeigen :

Figur 1  die Vorrichtung im Schema,

Figur 2  einen Teil der Vorrichtung im Schaubild,

Figuren 3 und 4  Einzelheiten,

Figur 5  die Möglichkeit einer weiteren Ausgestaltung einer Trägerbahn mit Haftfäden,

Figur 6  ein Ausführungsbeispiel einer Maschine im Seitenansicht im Schnitt.

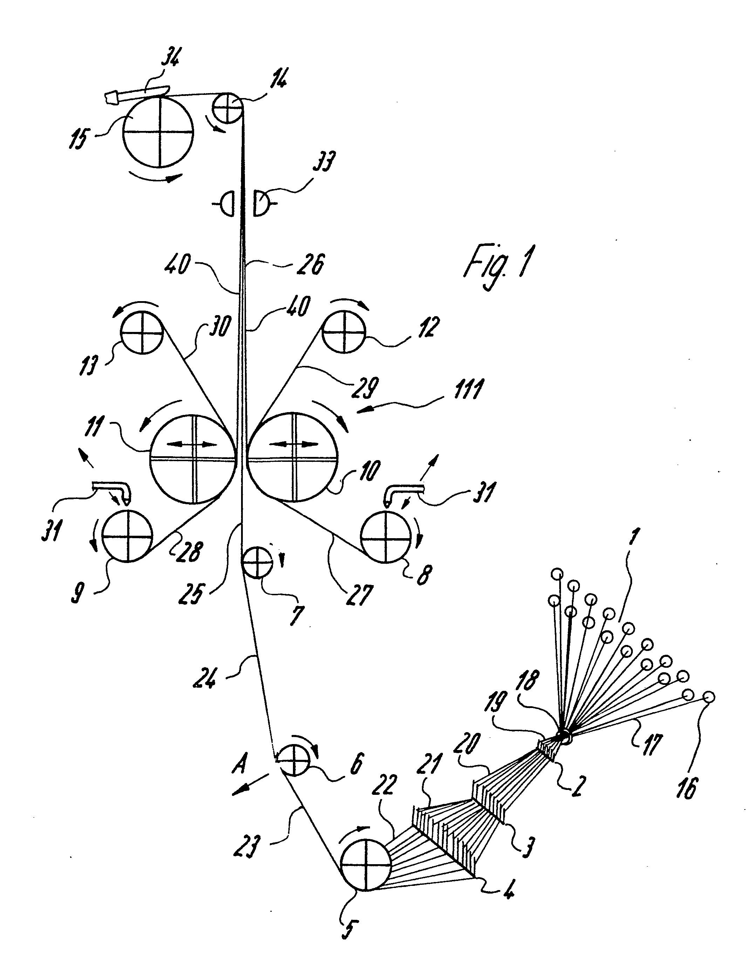

Wie in Fig. 1 gezeigt, können die Faserstränge 17 von einem Spulenbaum oder einem Schärgatter 1 kommen, wobei sie von den Spulen 16 abgezogen werden. Die Faserstränge 17 können auch als Einzelroving bezeichnet werden. Es kann sich z. B. um Carbonfasern handeln mit 12 000 Filamenten. Der Einzelstrang 17 weist bei diesem Beispiel dann in diesem Bereich noch 12 000 Filamente auf.

Anschließend kann eine Bündelung 18 der Einzelstränge vorgenommen werden, die dann eingefädelt werden in die erste Kämmstufe, die damit eine Aufspaltvorrichtung 2 ist. Die einzelnen Kämmzähne sind mit 19 in der Zeichnung bezeichnet. Es können auch andere Ausdünnvorrichtungen, wie z. B. Spannriegel oder Vibrationsvorrichtungen hier angeordnet sein.

Der Faserstrang hat dann bei diesem gezeigten Ausführungsbeispiel anschließend im Bereich 20 nicht mehr 12 000 Filamente, sondern nur noch eine halbe Roving-Stärke, bei dem angegebenen Ausführungsbeispiel somit 6 000 Filamente. Dieser verdünnte Faserstrang gelangt zur zweiten Kämmstufe oder Aufspaltvorrichtung 3, wo wiederum eine Halbierung erfolgt, so daß der Einzel-Roving, also der Faserstrang im Bereich 21 nur noch 3 000 Filamente hat. Die dritte Kämmstufe oder Aufspaltvorrichtung 4 halbiert den Faserstrang noch einmal, so daß dann der Faserstrang z. B. nur noch 1 500 Filamente hat. Dies ist selbstverständlich nur ein Beispiel. Im Bereich 22 ist bei dem dargestellten Ausführungsbeispiel die zu verwendende Endstufe des Faserstranges erreicht. Man kann auch bereits von sehr feinen Fasersträngen ausgehen, um dann in der Endstufe ein besonders feines, unidirektional liegendes Gelege zu haben.

Die Faserstränge gelangen anschließend nach der Ausdünnvorrichtung auf eine Sammeltrommel 5. Diese Sammeltrommel 5 kann mit Rillen versehen werden, damit die unidirektionale Lage der verdünnten Faserstränge gewährleistet ist.

Im Bereich 23 liegen somit die verdünnten Faserstränge unidirektional ausgerichtet nebeneinander und bilden bereits schon eine Gelegebahn, die aber noch keine Querstabilität aufweist.

Anschließend läuft die Gelegebahn über eine Umlenk- und Spanntrommel 6 mit feinen Rillen, die in Pfeilrichtung A versetzt werden kann, wodurch die Gelegebahn unter Spannung gehalten wird.

Die somit im Bereich 24 gespannt zulaufende Gelegebahn gelangt zu einer Einlauftrommel 7 od. dgl.

Der Einlauf erfolgt vertiakl genau in den Zwickel der Druckwalzenanordnung 111, bestehend aus zwei gummierten Andrückwalzen 10 und 11, die beidseitig der Warendurchführungsebene angeordnet sind. Dies ist die Andruckstation. In Fig. 1 sind die Walzen 10 und 11 im Abstand zueinander gezeichnet, um die einzelnen Bahnen deutlicher werden zu lassen. Sie liegen in der Arbeit aber drückend aufeinander und mindestens eine von ihnen ist angetrieben.

Vor der Andruckstation 111, vorzugsweise einer Druckwalzenanordnung, liegen bei dem dargestellten Ausführungsbeispiel der Fig. 1 Vorratstrommeln 8 und 9 für die Trägerbahnen 27 und 28. Diese tragen auf ihrer Oberfläche ablösbar und mit ihrer Kleberfläche nach außen gerichtet die Haftfäden od. dgl., die quer zum Bahnverlauf liegen. Die Trägerbahnen 27, 28 werden ebenfalls dem Einlaufzwickel der Andruckstation 111 zugeführt. Die Trägerbahnen 27, 28 legen sich rechts und links auf die Gelegebahn auf. Unter Druck werden die drei Bahnen aufeinandergepreßt und es erfolgt eine Übergabe der Haftfäden od. dgl. quer zur Verlaufsrichtung der Filamente in der Gelegebahn. In dieser Andruckstation 111 erfolgt bei diesem Ausführungsbeispiel somit die Übertragung der Haftfäden od. dgl. auf die Gelegebahn.

Die Trägerbahnen 27, 28 können in einer Vorbehandlung mit den Verbindungsmitteln, wie Haftfäden od. dgl. versehen werden. Sie können dann einer Trockenstufe zugeführt werden und aufgewickelt zur erfindungsgemäßen Vorrichtung kommen. Es besteht aber auch die Möglichkeit, hin- und herlaufende Düsen 31 vorzusehen, die die Haftfäden während .des Ablaufens der Trägerbahnen 27, 28 frisch auf die Oberfläche der Trägerbahn ablegen. Dies geschieht selbstverständlich auf der Fläche, die anschließend der Gelegebahn zugekehrt ist. Diese Düsen können z. B. Schmelzkleber auf die Trägerbahn aufbringen. Dieser Schmelzkleber erkaltet schnell auf der Trägerbahn und wird somit kalt auf die Gelegebahn aufgebracht, um die Fasern der Gelegebahn nicht negativ zu beeinflussen.

Nach Verlassen der Andruckstation 111 werden die von den Verbindungsmitteln befreiten Trägerbahnen über die Strecke 29 und 30 Aufwickeltrommeln 12 und 13 zugeführt. Das Material der Trägerbahn selbst kann notfalls noch einmal verwendet werden.

Die fertige Gelegebahn, die ggf. noch durch eine Trockenstation 33 laufen kann, gelangt anschließend über eine Umlenktrommel 14 auf eine Aufwickelwalze 15, der eine Anzahl von Messern 34 zugeordnet sein können, die parallel zueinanderliegen. Es können hier auch ggf. rotierende Messer eingesetzt werden, um die Bahn in Längsrichtung in entsprechende Streifen zu teilen, wenn nicht die Gesamtbreite der Bahn Verwendung finden soll.

Wie bereits erwähnt, stellt die Zeichnung der Fig. 1 lediglich ein schematisch gezeichnetes Ausführungsbeispiel dar und zur besseren Darstellung sind die Druckwalzen 10, 11 im Abstand voneinander gezeichnet. Damit sollen die gelegten Verbindungsmittel 40 irgendwie in dieser schematischen Figur noch dargestellt werden.

Diese Verbindungsmittel 40 sind als einfache Striche gezeigt. Sie müßten im oberen Abschnitt direkt auf dem Roving aufliegen. Auch hier ist zur besseren Darstellung die Distanz gewählt.

Wie und in welcher Form nun die Verbindungsmittel 40 aufgebracht werden, kann vielfach variiert werden. So ist der Verlauf der Verbindungsmittel 40 frei wählbar.

In Fig. 2 ist ein Ausführungsbeispiel einer Trägerbahn gezeigt, wie sie von einer Vorratstrommel 8 kommend über eine Andruckwalze 10 laufend zu einer Aufwickelwalze oder Aufwickeltrommel 12 geführt ist. Man sieht den etwa mäanderförmigen Verlauf der Verbindungsmittel 40. Wenn die Vorrichtung arbeitet, ist im oberen Bereich 29 kein Verbindungsmittel 40 mehr zu sehen. Die Darstellung zeigt eine Seite der Führung einer Trägerbahn.

Durch einfaches Hin- und Herlaufen der Düsen 31 über die Gesamtarbeitsbreite kann diese in Fig. 2 gezeigte mäanderformähnliche Auftragung, wie sie auch in Fig. 3 zu sehen ist, erzielt werden.

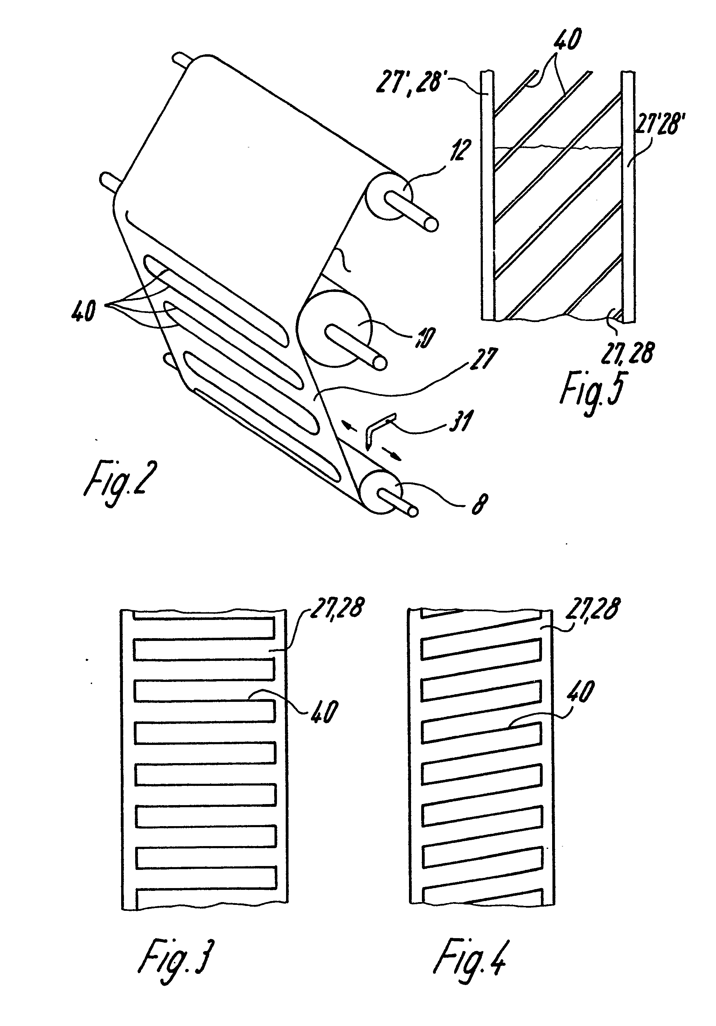

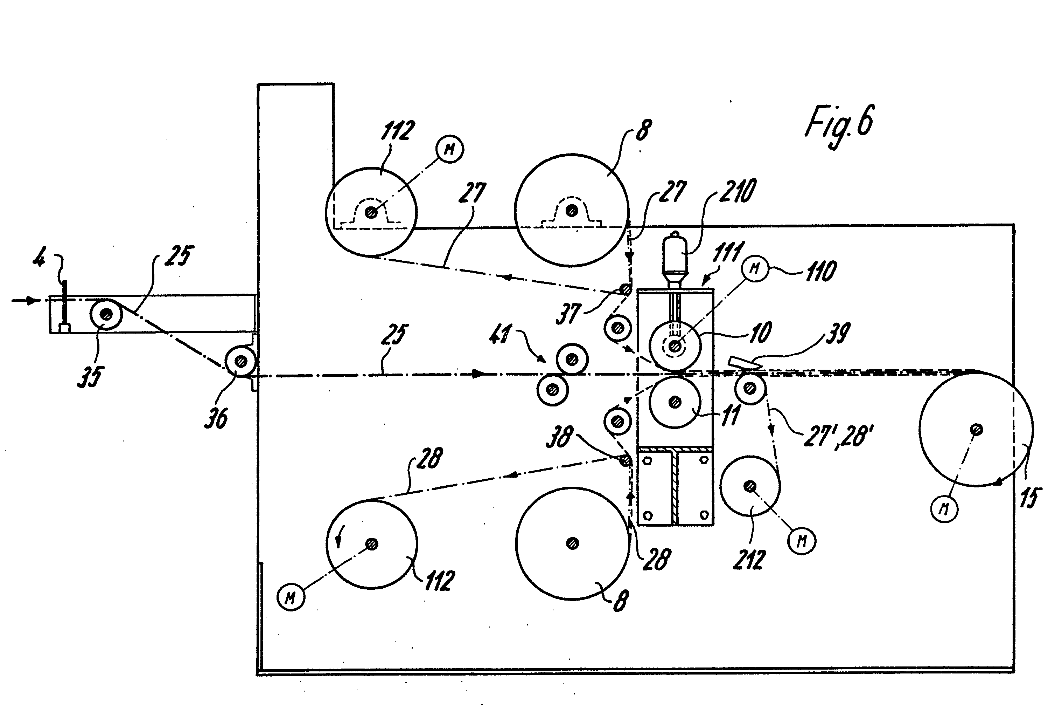

Ferner besteht die Möglichkeit, die Düsen 31 sich langsamer bewegen zu lassen als die Abrollbewegung der Trägerbahnen 27 und 28 erfolgt und sie ggf. vor- und zurücklaufend zu bewegen, wodurch eine Schrägauftragung gemäß der Fig. 4 erzielbar ist. Wesentlich ist überhaupt, daß Verbindungsmittel 40 partiell oder generell im Querauftrag erst auf die Trägerbahn 27, 28 und anschließend auf die Gelegebahn aufgesetzt werden. Der Auftrag auf die Trägerbahn 27, 28 kann wie gezeigt vor Ort geschehen, aber auch in vorhergehenden Arbeitsschritten in einer anderen Fertigungsstufe. Die Trägerbahnen können somit fertig angeliefert werden und dann in einer Vorrichtung etwa in der Form der Fig. 1, in der Führungsart der Fig. 2 oder auch gemäß Fig. 6 weiterverarbeitet werden.

Wesentlich ist, daß die zulaufende Gelegebahn 25 ihre Querstabilität in der Andruckstation 111, vorzugsweise einer Druckwalzenanordnung erhält, um als fertige, auch querstabile Gelegebahn 26 weiter verwendet zu werden.

In Fig. 6 ist ein Ausführungsbeispiel gezeigt anhand einer Maschinenkonstruktion. Die Gelegebahn 25 läuft in die Vorrichtung ein, ggf. wieder über eine Ausdünnungsvorrichtung oder Aufspaltvorrichtung 4, beispielsweise einen Kamm od. dgl. Sie umläuft zwei Umlenkwalzen 35 und 36, durchläuft eine weitere Ausbreitvorrichtung der Ausdünnungsvorrichtung, in diesem Fall einen Spannriegel 41, bestehend aus zwei etwas versetzt zueinanderliegenden Walzen und läuft anschließend in den Zwickel der Andruckstation 111, bestehend aus den Druckwalzen 10 und 11. Die Druckwalze 10 ist angetrieben durch einen Motor 110 und kann über eine Zylinderanordnung 210 gehoben und gesenkt werden.

Von der Seite kommend wird jeweils eine Trägerbahn 27, 28 zugeführt, die aus einer Grundbahn besteht, und seitlichen Trägerbahnstreifen 27' und 28'. Dies wird später anhand Fig. 5 beschrieben. Diese Trägerbahnstreifen sind sozusagen schmale Trägerbahnen. Die Trägerbahnen bestehen somit im Grunde genommen aus drei Teilen, einer breiten Grundbahn 27 oder 28, den Trägerbahnstreifen 27', 28', sowie den Verbindungsmitteln 40. Diese sind, wie Fig. 5 zeigt, beim Ausführungsbeispiel der Fig. 6 schräg angeordnete Haftstreifen, Kleberstreifen od. dgl.

Bei Umlenkwalzen oder Stangen 37, 38 teilt sich die Trägerbahn und nur der in Fig. 5 im oberen Teil gezeigte Teil läuft in die Andruckstation, während die Basisbahn 27, 28 auf angetriebene Aufwickelrollen 112 aufläuft. Dies geschieht spiegelbildlich rechts und links der Gelegebahn 25.

Der Rest der Trägerbahn, d. h. die Trägerbahnstreifen 27', 28' mit den Verbindungsmitteln, insbesondere Haftstreifen, läuft durch die Andruckstation 111. Die Trägerbahnstreifen 27', 28' laufen dann weiter, nachdem sie durch Messer 39 abgeschnitten sind, auf Aufwickelrollen 212 für diese Streifen.

Da die Streifen 27', 28' über die Bahnbreite hinausragend angeordnet sind, können jeweils die abgeschnittenen Streifen sowohl der Oberals auch der Unterseite auf die Aufwickelrolle 212 aufgebracht werden. Es kann aber auch eine weitere Rolle 212 im oberen Bereich oberhalb der Warenbahndurchführungsebene angeordnet sein.

Die Gelegebahn 25 mit den aufgesetzten Verbindungsmitteln 40, also den frei geschnittenen Haftstreifen wird anschließend zur angetriebenen Aufwickelwalze 15 geführt und hier vollständig aufgewickelt, ggf. noch unter Zwischenlegung eines Mitläufers, der die einzelnen Lagen voneinander trennt.

Die Trägerbahnen 27 und 28 bestehen bei den Ausführungsbeispielen der Fig. 3, 4 und 5 vorzugsweise jeweils aus Papier oder Folie mit einer antiadhäsiv behandelten Oberfläche oder aus einem antiadhäsiven Material.

Beim Ausführungsbeispiel der Fig. 3 und 4 kann beispielsweise durch die hin- und herlaufenden und entsprechend geführten Düsen 31 ein Hot-melt-Auftrag erfolgen, d. h. also ein Heißschmelzkleber.

Wenn eingangs gesagt worden ist, daß die Verstärkungsfasern nicht mit Wärme in Berührung kommen sollen, so stimmt dies auch bei dem Hot-melt-Auftrag. Der Heißschmelzkleber besteht aus einem pastösen Material, das verflüssigt wird (was bekannt ist) und daß in verflüssigter Bahn auch die Trägerbahn 27 oder 28 aufgebracht wird, und zwar heiß. Da nur schmale Streifen aufgebracht werden, erkalten diese sofort und werden demzufolge kalt dem Gelege bzw. der Gelegebahn zugeführt.

In Fig. 5 ist ein weiteres Ausführungsbeispiel gezeigt, bei dem die Trägerbahn praktisch aus drei Teilen besteht, und zwar trägt die breite Bahn 27 und 28 seitlich Trägerbahnstreifen 27' und 28'. Die Trägerbahn 27, 28 besteht aber auch wieder aus Papier oder Folie mit antiadhäsiver Oberfläche und die Streifen können beispielsweise aus Polyestervlies bestehen mit einseitig aufgebrachtem Permanentkleber, z. B. auf Acrylatbasis. Die Haftstreifen sind fest verbunden mit den Trägerbahnstreifen 27' und 28' und können sich von der antiadhäsiven Bahn 27, 28 lösen, wie es in Fig. 6 gezeigt ist. Nur die Trägerbahnstreifen 27', 28' und die Haftsstreifen 40 laufen mit ihrer Klebfläche zur Oberfläche der Gelegebahn gerichtet auf diese zu, und zwar in einer Form, wie es im oberen Bereich der Fig. 5 gezeigt ist. Diese Führung ist aber ohne weiteres möglich, wenn auch durch Abführen der Trägerbahn 27 oder 28 auf die Rollen 112 nur noch ein relativ labiles Gebilde der Andruckstation zugeführt wird. Nach Verlassen der Andruckstation werden, wie bereits erwähnt, die Trägerbahnstreifen 27', 28' von den Haftstreifen abgeschnitten und laufen auf ihre Aufwickelrollen. Es ist vorteilhaft, denselben Permanent- oder Dauerkleber sowohl auf den Trägerbahnstreifen 27', 28' als auch auf den Haftstreifen 40 zu verwenden, um ein gleichmäßiges Lösen von der antiadhäsiven Bahn zu ermöglichen.

**Ansprüche**

1. Verfahren zur Herstellung eines Geleges aus Kunststoff-Verstärkungsfasern auf der Basis von Carbon-, Aramid-, Polyester- oder Glasfasern, bei dem die Verstärkungsfasern mit quer über die Legerichtung der Fasern laufenden streifenförmig verlaufenden Verbindungsmitteln miteinander verbunden sind, dadurch gekennzeichnet, daß nach Herstellung eines unidirektional liegenden Geleges in Bahnform (25) dieses anschließend dem Zulauf mindestens einer Trägerbahn (27, 28) zugeführt wird, die ihrerseits das Verbindungsmittel (40), wie Haftfäden od. dgl. transportiert und die Haftfäden (40) in einer Andruckstation (111) an die Gelegebahn (25) kontinuierlich laufend durch Kontaktberührung aufgelegt werden.

2. Verfahren nach Anspruch 1, dadurch gekennzeichnet, daß das Verbindungsmittel (40), wie Haftfäden od. dgl. zumindest auf eine Trägerbahn (27, 28) aufgesetzt wird und von dieser Trägerbahn abgenommen und auf die Gelegebahn (25) in der Andruckstation (111) aufgesetzt wird.

3. Verfahren nach Anspruch 1, dadurch gekennzeichnet, daß das von mindestens einer Spule (16) kontinuierlich zulaufende unverdrehte Faserbündel bzw. der Faserstrang (Roving) (17) zunächst ausgebreitet und unidirektional im Faserverlauf liegend zu einer flächigen Gelegebahn geformt wird, bevor die Gelegebahn zur Andruckstation gelangt.

4. Verfahren nach Anspruch 1, 2 und 3, dadurch gekennzeichnet, daß die zur Bildung der Gelegebahn zulaufenden Faserstränge verdünnt werden.

5. Verfahren nach Anspruch 1 und 2, dadurch gekennzeichnet, daß die fertige Gelegebahn (26) in einer nach der Andruckstation (111) angeordneten Aufwickelstation (15) in schmale Streifen geschnitten wird.

6. Verfahren nach Anspruch 1 oder 2, dadurch gekennzeichnet, daß die Trägerbahn aus drei Teilen besteht, und zwar aus einem Träger (27, 28) mit antiadhäsiver Oberfläche und darauf angeordneten, mit Permanentkleber befestigten Streifen (27', 28'), die mit den ebenfalls mit Permanentkleber versehenen Haftfäden (40) zu einer Einheit verbunden sind, von der die Trägerbahn (27, 28) lösbar ist, und daß die mit Permanentkleber versehene Seite der Trägerbahnstreifen (27', 28') und der Haftfäden (40) in der Andruckstation (111) auf das Gelege (25) aufgelegt wird.

7. Vorrichtung zur Durchführung des Verfahrens nach Anspruch 1 und 2, dadurch gekennzeichnet, daß einer Druckwalzenanordnung (111) mindestens einseitig zum Gelegebahnverlauf liegend eine vor der Druckwalzenanordnung (111) liegende Trägerbahn-Vorratstrommel (8, 9) und mindestens eine der Druckwalzenanordnung nachgeordnete Aufwickeltrommel (12, 13) für die Trägerbahn (27, 28, 27', 28') angeordnet ist.

8. Vorrichtung nach Anspruch 7, dadurch gekennzeichnet, daß einem Schärgatter oder Spulenbaum (1) od. dgl. eine Ausdünnvorrichtung nachgeordnet ist, die vor der Druckwalzenanordnung (111) liegt.

9. Vorrichtung nach Anspruch 8, dadurch gekennzeichnet, daß dem Schärgatter oder Spulenbaum (1) eine mehrstufige Aufspaltvorrichtung (2, 3, 4) nachgeordnet ist für die mehrstufige Aufspaltung der zulaufenden Faserstränge.

10. Vorrichtung nach Anspruch 7, dadurch gekennzeichnet, daß die fertige Gelegebahn auf eine Aufwickelwalze (15) aufwickelbar ist, der eine Schneidanordnung, wie Messer (34) zugeordnet ist.

11. Vorrichtung nach Anspruch 7, dadurch gekennzeichnet, daß zur Aufbringung der Verbindungsmittel, wie Haftfäden od. dgl. auf die Trägerbahnen (27, 28) den Bahnen oder den Vorratstrommeln (8, 9) hin und her über die Gesamtarbeitsbreite geführte Düsen (31) zugeordnet sind.

12. Vorrichtung nach Anspruch 7, dadurch gekennzeichnet, daß beidseitig der Gelegebahnführung die Trägerbahnen (27, 28, 27', 28') im spitzen Winkel dieser zuführbar sind und im Arbeitsverlauf der Andruckstation nachgeordnet die Trägerbahnen im spitzen Winkel von der Gelegebahnführung abführbar und zur Aufwickeltrommel (12, 13) führbar sind.

**Claims**

1. A method of producing a composite laid fibre material comprising plastics reinforcing fibres based on carbon, aramide, polyester or glass fibres, wherein the reinforcing fibres are connected together with connecting means which extend in a strip-like configuration and which extend transversely over the direction of laying of the fibres, characterised in that, after the production of a unidirectionally lying fibre material in web form (25), said material is then fed to the feed supply of at least one carrier web (27, 28) which in turn transports the connecting means (40) such as adhesive threads or the like and in a pressure application station (111) the adhesive threads (40) are continuously movingly applied to the web (25) of material by contact therewith.

2. A method according to claim 1, characterised in that the connecting means (40) such as adhesive threads or the like is applied at least to a carrier web (27, 28) and removed from said carrier web and applied to the web (25) of material in the pressure application station (111).

3. A method according to claim 1, characterised in that the untwisted fibre bundle or fibre strand (roving) (17) which is continuously supplied from at least one spool (16) is firstly spread out and formed into a flat web of material in a condition of lying unidirectionally in the run of the fibres, before the web of material goes to the pressure application station.

4. A method according to claim 1, claim 2 or claim 3, characterised in that the fibre strands which are supplied to form the web of material are thinned out.

5. A method according to claim 1 and claim 2, characterised in that the finished web (26) of material is cut into narrow strips in a winding-on station (15) disposed downstream of the pressure application station (111).

6. A method according to claim 1 or claim 2, characterised in that the carrier web comprises three parts, more specifically a carrier (27, 28) having an anti-adhesive surface and strips (27', 28') which are arranged thereon and which are secured with permanent adhesive and which are joined by the adhesive threads (40) which are also provided with permanent adhesive, to form a unit from which the carrier web (27, 28) can be released, and that the side which is provided with permanent adhesive of the carrier web strips (27', 28') and the adhesive threads (40) is applied to the material (25) in the pressure application station (111).

7. Apparatus for carrying out the method according to claim 1 and claim 2, characterised in that associated with a pressure roll assembly (111), disposed at least on one side with respect to the path of movement of the web of fibre material, are a carrier web supply drum (8, 9) disposed upstream of the pressure roll assembly (111), and at least one winding-on drum (12, 13) for the carrier web (27, 28, 27', 28'), which is disposed downstream of the pressure roll assembly.

8. Apparatus according to claim 7, characterised in that disposed downstream of a feed creel or winding beam (1) or the like is a thinning-out apparatus which is disposed upstream of the pressure roll assembly (111).

9. Apparatus according to claim 8, characterised in that disposed downstream of the creel or winding beam (1) is a multistage splitter means (2, 3, 4) for multi-stage splitting up of the fibre strands fed thereto.

10. Apparatus according to claim 7, characterised in that the finished web of fibre material can be wound on to a winding-on roll (15) with which there is associated a cutting means such as a knife (34).

11. Apparatus according to claim 7, characterised in that, for the purposes of applying the connecting means such as adhesive threads or the like to the carrier webs (27, 28), associated with the webs or the supply drums (8, 9) are nozzles (31) which are guided with a reciprocating motion over the entire operating width.

12. Apparatus according to claim 7, characterised in that the carrier webs (27, 28, 27', 28') can be fed at an acute angle to the material web guide path on both sides thereof and, downstream of the pressure application station in the operating procedure, the carrier webs can be taken away at an acute angle from the web guide path and can be guided to the winding-on drum (12, 13).

**Revendications**

1. Procédé de fabrication d'une nappe de fibres de renforcement synthétique à base de fibres de carbone, d'aramide, de polyester ou de verre, dans laquelle les fibres de renforcement sont liées à l'aide d'agents liants disposés selon des bandes transversales à la direction des fibres, caractérisé en ce que, après fabrication d'une nappe unidirectionnelle sous forme d'une bande (25), celle-ci est ensuite amenée à l'arrivée d'au moins une bande-support (27, 28) qui, pour sa part, transporte l'agent liant (40), tel que des fils adhésifs ou similaires, et que les fils adhésifs (40) sont amenés de façon continue au contact de la bande de fibres (25) dans un poste de pressage (111).

2. Procédé selon la revendication 1, caractérisé en ce que l'agent liant (40), tel que des fils adhésifs ou similaires, est placé au moins sur une bande-support (27, 28), enlevé de cette bande-support et placé sur la bande de fibres (25) dans le poste de pressage.

3. Procédé selon la revendication 1, caractérisé en ce que le faisceau ou le cordon de fibres non tordu (Roving) (17) provenant de façon continue d'une bobine (16) est tout d'abord mis au large, formé de façon unidirectionnelle dans le sens des fibres en une nappe plate de fibres avant que la bande de fibres ne parvienne au poste de pressage.

4. Procédé selon les revendications 1, 2 et 3, caractérisé en ce que les cordons de fils servant à la formation de la bande de fibres sont divisés.

5. Procédé selon la revendication 1 et la revendication 2, caractérisé en ce que la bande de fibres (26) terminée est coupée en petites bandes dans un poste d'enroulage disposé après le poste de pressage.

6. Procédé selon la revendication 1 ou la revendication 2, caractérisé en ce que la bande-support se compose de 3 parties : un support (27, 28) muni d'une surface anti-adhésive sur laquelle sont disposées des bandelettes (27') (28') fixées par une colle permanente, qui sont reliées par des fils adhésifs (40) revêtus de colle permanente, en un élément unitaire dont est séparable la bande-support (27) (28), et en ce que la face revêtue de colle permanente des bandelettes-supports (27', 28') et des fils adhésifs (40) est placée sur la nappe (25) dans le poste de pressage (111).

7. Dispositif pour la mise en œuvre du procédé selon les revendications 1 et 2, caractérisé en ce que, à l'horizontale d'un dispositif de pressage à rouleaux (111) au moins d'un côté par rapport au sens de marche de la nappe, sont disposés un tambour de stockage (8, 9) situé avant le dispositif de pressage à rouleaux (111) et au moins un tambour d'enroulage (12, 13), situé après le dispositif de pressage à rouleaux, pour la bande support (27, 28, 27', 28').

8. Dispositif selon la revendication 7, caractérisé en ce qu'un dispositif diviseur placé avant le dispositif à rouleaux presseurs (111) est disposé après un ratelier ou une ensouple (1).

9. Dispositif selon la revendication 8, caractérisé en ce qu'il adjoint au ratelier ou à l'ensouple (1) un dispositif de séparation en plusieurs stades (2, 3, 4) pour la séparation en plusieurs stades du cordon de fibres.

10. Dispositif selon la revendication 7, caractérisé en ce que la bande de fibres terminée est enroulée sur un rouleau d'enroulage (15) qui est équipé d'un outil de coupe tel qu'un couteau (34).

11. Dispositif selon la revendication 7, caractérisé en ce que, pour l'amenée de l'agent liant, tel que les fils adhésifs ou similaires, sur la bande-support (27, 28), la bande ou les tambours de stockage (8, 9), des buses (31) sont disposées de part et d'autre de la largeur totale.

12. Dispositif selon la revendication 7, caractérisé en ce que les bandes-supports (27, 28, 27', 28') sont amenées des deux côtés de la bande de fibres selon un angle aigu par rapport à celle-ci et que, dans la ligne de travail du poste de pressage et après celui-ci, les bandes-supports sont enlevées de la bande de fibres selon un angle aigu et conduites à un tambour d'enroulage (12, 13).

0 072 453

Fig. 1

Fig.2

Fig.5

Fig.3

Fig.4

*Fig. 6*

0 072 453